# EUROPEAN PATENT APPLICATION

(11) **EP 4 819 472 A1**
(43) Date of publication of application: **07.10.2026**
(21) Application number: 26170253.4
(22) Date of filing: 01.04.2026
(51) Int. Cl.: H02M 3/158, H02M 1/00, H02M 1/32, H02M 1/36

(54) **A PHASE-CONTROLLED INTERLEAVED BOOST CONVERTER**

(30) Priority: 03.04.2025 IN 202511032974
(71) Applicant: Vertiv Corporation, Westerville, OH 43082 (US)
(72) Inventor: TRIVEDI, Nitin, Westerville 43082 (US); SHARMA, Priyal, Westerville 43082 (US); RAUT, Dilesh Arvind, Westerville 43082 (US)
(74) Representative: Ambroz, Simon

(57) **Abstract**

An interleaved boost converter **100,** comprising a switching circuit **102** with two switching arms **122** and **124,** each including at least two switches and an inductor. A load detection module **104** determines the electrical load, while sensors **106** monitor the temperature and operational time of the switches. A control unit **108** is configured to activate both switching arms **122** and **124** upon boot-up and deactivate one switching arm when the electrical load falls below a predefined percentage of total capacity. The control unit **108** alternates operation between the switching arms **122** and **124** if the temperature or operational time of switches in one arm exceeds predefined thresholds, reducing thermal stress and enhancing efficiency. When the electrical load exceeds the predefined percentage, both switching arms **122** and **124** are reactivated. Adaptive phase control optimizes efficiency, minimizes losses, reduces thermal stress, and improves reliability by dynamically adjusting operational phases.

## Description

### TECHNICAL FIELD

The present invention generally relates to an interleaved boost converter. More specifically, the present invention is related to a phase-controlled interleaved boost converter.

### BACKGROUND

DC-DC converters play a critical role in modern power electronics, enabling efficient voltage regulation for various applications, including telecommunication power supplies, renewable energy systems, industrial automation, and electric vehicles. Among the various converter topologies, interleaved boost converters have gained significant attention due to their ability to enhance power conversion efficiency while reducing input current ripple. Interleaved boost converters employ multiple phases operating in parallel to share the load, thereby distributing current and reducing electrical stress on individual components.

A two-phase interleaved boost converter is a widely adopted DC-DC converter topology that improves transient response, lowers electromagnetic interference (EMI), and enhances overall system reliability. In such converters, both phases operate simultaneously, with each phase handling a portion of the total current. This load-sharing approach is particularly beneficial at moderate to high power levels, as it promotes balanced current distribution, reduces thermal concentration, and improves overall conversion efficiency.

### SUMMARY OF THE INVENTION

This summary is provided to introduce aspects related to a phase-controlled interleaved boost converter. An interleaved boost converter includes multiple switching arms, sensors, a load detection module, and a control unit configured to adaptively control operation of the switching arms based on electrical load and monitored switch conditions.

An interleaved boost converter includes a switching circuit. The switching circuit comprises two switching arms. Each switching arm comprises at least two switches and an inductor. Further, the interleaved boost converter includes one or more sensors connected to each switch, to determine temperature and operational time of the switches. Furthermore, the interleaved boost converter includes a load detection module to determine electrical load on the interleaved boost converter and a control unit connected to the switches, the sensors, and the load detection module.

The control unit is configured to activate the switches of the switching arms upon boot-up of the interleaved boost converter. Further, the control unit deactivates the switches of one of the switching arms, based on a determination that the electrical load is less than a predefined percentage of total capacity of the interleaved boost converter. Further, the control unit alternates operations between the switching arms, based on a determination that at least one of, the temperature and the operational time of the switches of one switching arm is higher than a predefined threshold temperature and a predefined threshold operational time.

Additionally, the control unit is configured to re-activate the operation of the switches of the switching arms, based on a determination that the electrical load is higher than the predefined percentage of total capacity of the interleaved boost converter.

Other aspects and advantages of the invention will become apparent from the following description, taken in conjunction with the accompanying drawings, illustrating by way of example the principles of the invention.

### BRIEF DESCRIPTION OF THE DRAWINGS

The accompanying figures of the drawing, which are included to provide a further understanding of general aspects of the system/method, are incorporated in and constitute a part of this specification. These illustrative aspects of the system/method, and together with the detailed description, explain the principles of the system. No attempt is made to show structural details in more detail than is necessary for a fundamental understanding of the system and various ways in which it is practiced. The following figures of the drawing include:
**FIG. 1** illustrates a block diagram of an interleaved boost converter;
**FIG. 2** illustrates a switching circuit of the interleaved boost converter;
**FIGS. 3A** and **3B** illustrate graphs illustrating efficiency characteristics of the interleaved boost converter under different phase operation modes; and
**FIG. 4** illustrates a flow chart of a method of controlling two phases/switching arms of an interleaved boost converter.

In the appended figures, similar components and/or features may have the same numerical reference label. Further, various components of the same type may be distinguished by following the reference label with a letter. If only the first numerical reference label is used in the specification, the description is applicable to any one of the similar components and/or features having the same first numerical reference label irrespective of the suffix.

### DESCRIPTION OF THE INVENTION

Illustrative examples are described with reference to the accompanying drawings. Wherever convenient, the same reference numbers are used throughout the drawings to refer to the same or like parts.

Interleaved boost converters are often required to operate across a wide range of load conditions, including low-load operating regions typically ranging from 10% to 40% of the total rated capacity. During such low-load conditions, both phases of a two-phase interleaved boost converter remain active, despite the reduced current demand. Operation with multiple active phases at low load levels leads to increased switching and conduction losses, resulting in reduced energy efficiency and elevated heat dissipation. The additional thermal and electrical stress imposed on power semiconductor devices, such as MOSFETs, accelerates component ageing and increases the probability of failure over time, thereby negatively impacting converter reliability and operational lifespan.

Inefficient operation under low-load conditions also results in unnecessary energy consumption, which is undesirable in applications where energy efficiency is a critical design criterion. Consequently, there is a need for improved control techniques capable of adaptively managing phase operation to reduce losses, limit semiconductor stress, and enhance the long-term reliability of interleaved boost converter systems.

The present invention solves the challenges faced by existing interleaved boost converters by providing an interleaved boost converter that dynamically adjusts number of active switching arms/phases based on load conditions, temperature, and efficiency requirements. The invention optimizes power conversion by incorporating a phase-controlled switching circuit that enables single-phase operation at low loads and multi-phase interleaved operation at higher loads. The incorporation of the phase-controlled switching circuit significantly improves efficiency, reduces switching losses, and minimizes thermal stress on semiconductor components, thereby enhancing system reliability.

The interleaved boost converter disclosed in the present invention includes a switching circuit with at least two switching arms including inductors, switches (MOSFETs), diodes, and filtering capacitors, all managed by a control unit that regulates phase activation based on real-time operating conditions. The interleaved boost converter seamlessly transitions between single-phase and two-phase operation depending on load demand, ensuring optimal power conversion efficiency. Additionally, the switching circuit features bypass diodes for protection against voltage transients.

The present invention may be suited for high-efficiency DC-DC conversion applications, such as uninterruptible power supplies (UPS), renewable energy systems, and electric vehicle power management systems, where stable and efficient power conversion is essential.

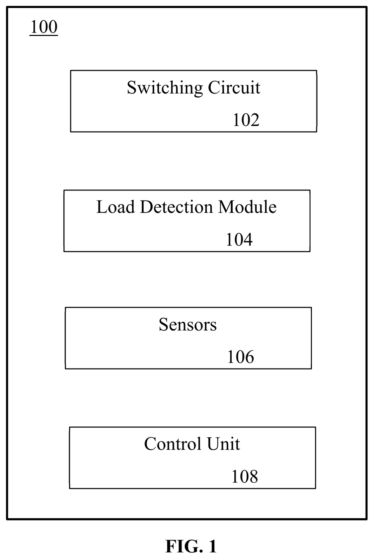

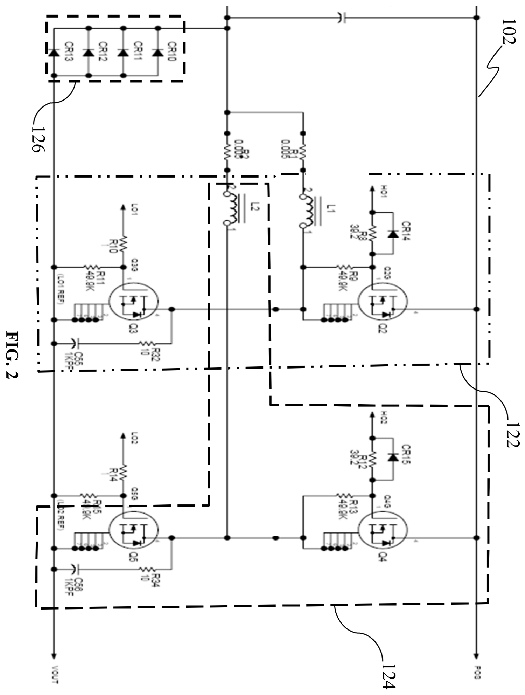

**FIG. 1** illustrates a block diagram of an interleaved boost converter **100.** The interleaved boost converter **100** is a type of DC-DC step-up converter that utilizes a switching circuit **102** including two switching arms **122** and **124** operating in parallel with a phase shift between the switching arms **122** and **124,** as shown in **FIG.** 2. Now again referring to **FIG. 1****,** the interleaved boost converter **100** may include a load detection module **104,** one or more sensors **106,** and a control unit **108** to facilitate phase control in the switching circuit **102** by alternating operation of the switching arm **122** and switching arm **124** in the switching circuit **102.**

The load detection module **104** may be connected to the switching circuit **102** to determine electrical load on the interleaved boost converter **100.** The load detection module **104** may be configured to analyse various electrical parameters, including output current, output voltage, input power, and switching frequency, to assess the real-time power demand of the interleaved boost converter **100.**

The load detection module **104** may utilize the one or more sensors **106,** such as Hall effect sensors and shunt resistors, which may be placed in series with components of the switching circuit **102** to measure the real-time current flowing through the switching circuit **102.** Voltage sensors, such as resistive voltage dividers and capacitive probes, may be used to monitor the voltage across the output terminals of the interleaved boost converter **100,** providing additional insight into the electrical load.

Further, the one or more sensors **106** may be configured to determine temperature and operational time of switches **(Q2, Q3, Q4** and **Q5,** as illustrated in **FIG. 2****)** of the switching circuit **102.** The sensors **106** may be positioned near or integrated with the switches in each switching arm **122, 124** to ensure accurate real-time monitoring without interfering with circuit operation. The sensors **106** may be placed on at least one of drain terminals, source terminals, and heat sinks of the switches to detect any rise in temperature due to conduction losses and thermal stress. The sensors **106** to determine temperature may be selected from a group of sensors including thermocouples, negative temperature coefficient (NTC) thermistors, silicon-based integrated temperature sensors, and infrared (IR) sensors.

In an implementation, thermocouples may generate a voltage proportional to the temperature difference, while NTC thermistors may provide a resistance value that decreases with increasing temperature, allowing precise thermal monitoring. In one implementation, integrated silicon temperature sensors may be embedded in the switches, enabling direct junction temperature measurement. In another implementation, IR sensors may be mounted at a distance to detect thermal radiation emitted by the switches, providing non-contact temperature monitoring. The interleaved boost converter **100** may use temperature data from the sensors **106** to detect potential thermal stress and reduce duty cycle of an overheated switch to an alternate phase to maintain stable operation.

To determine the operational time of the switches, the sensors **106** may be configured to track the duration for which each switch in the switching circuit **102** remains active. The sensors **106** to determine operational time may be selected from a group of sensors including Hall effect current sensors, gate drive signal monitors, microcontroller-based pulse counters, and shunt resistors. The operational time may be used to implement phase balancing, preventing switches from experiencing excessive usage compared to others.

In one implementation, Hall effect sensors may be positioned in series with the source or drain terminals of the switches to measure the real-time current flow and determine how long each switch remains in conduction state. In another implementation, gate drive signal monitors such as optocouplers and logic counters may be used to track the number of switching pulses and their duration by analysing gate drive signals such as **HO1** and **HO2** (as shown in **FIG. 2****).** In one implementation, microcontroller-based pulse counters may count the total switching cycles and measure the on-time of each switch to calculate a cumulative operational duration. In another implementation, shunt resistors in a gate drive circuit may provide voltage drop data, which may be used to estimate total active duration of each switch.

The control unit **108** may include a processor and a memory to facilitate phase control in the switching circuit **102** of the interleaved boost converter **100.** The processor may include one or more general purpose processors (e.g., INTEL^{®} or Advanced Micro Devices^{®} (AMD) microprocessors) and/or one or more special purpose processors (e.g., digital signal processors or Xilinx^{®} System On Chip (SOC) Field Programmable Gate Array (FPGA) processor), MIPS/ARM-class processor, a microprocessor, a digital signal processor, an application specific integrated circuit, a microcontroller, a state machine, or any type of programmable logic array.

The memory may include a plurality of storage locations that are addressable by the processor for storing software programs and other necessary information (predefined percentage, predefined threshold temperature, predefined threshold operational time) associated with the examples described herein. The processor may comprise hardware elements or hardware logic adapted to execute the software programs and manipulate data structures.

The control unit **108** may be connected to the switches in the switching arms **122** and **124** of the switching circuit **102,** the sensors **106,** and the load detection module **104.** The control unit **108** is configured to activate the switches **(Q2, Q3, Q4** and **Q5,** as illustrated in **FIG. 2****)** upon boot-up of the interleaved boost converter **100.**

Further, the control unit **108** deactivates the switches of one of the switching arms **122** and **124** (as shown in **FIG. 2****)** based on a determination that the electrical load is less than a predefined percentage of total capacity of the interleaved boost converter **100.** In one implementation, a preferred value of the predefined percentage may range from 40-50%. The load detection module **104** detects the electrical load on the interleaved boost converter **100** and conveys the electrical load to the control unit **108.**

Further, if the temperature or the operational time of the switches of one switching arms **122** and **124** is higher than a predefined threshold temperature or a predefined threshold operational time respectively, the control unit **108** alternates operations between the switching arms **122** and **124.** Therefore, the switching arm that is currently active may be deactivated, while the switching arm that is deactivated at that moment may be activated. The predefined threshold temperature may depend on thermal limits of the switches in the switching arms **122** and **124.** In one implementation, a preferred value of the predefined threshold temperature may range from 50-70°C. In another implementation, a most preferable predefined threshold temperature may be 60°C. The predefined threshold operational time may depend on rated lifecycle of the switches in the switching arms **122** and **124** in terms of switching cycles or cumulative operational hours. In one implementation, a preferred value of the predefined threshold operational time may range from 45 minutes to 90 minutes. In another implementation, a most preferable predefined threshold operational time may be 1 hour.

Alternating operation between the switching arms **122** and **124** ensures balanced thermal distribution and reduces excessive stress on any single set of switches in a single switching arm, thereby enhancing overall reliability and longevity of the interleaved boost converter **100.** By dynamically managing activation of the switching arms **122** and **124** based on real-time temperature and operational time data, the control unit **108** optimizes power conversion efficiency while preventing overheating and premature degradation of the switches. Controlled phase in the interleaved boost converter **100** contributes to improved stability, reduced power losses, and enhanced durability of the interleaved boost converter **100** under varying load conditions.

Additionally, the control unit **108** is configured to re-activate the operation of all switches of the switching circuit **102,** based on a determination that the electrical load is higher than the predefined percentage of total capacity of the interleaved boost converter **100.**

For external communication and monitoring, the control unit **108** may be equipped with communication interfaces, including but not limited to UART, SPI, I2C, or CAN bus. The communication interfaces enable remote monitoring of system performance, diagnostic analysis, and integration with higher-level control systems. The control unit **108** may include a fault detection mechanism that can trigger protective actions, such as shutting down the converter in case of severe abnormalities like short circuits, overvoltage, and excessive current flow.

**FIG. 2** illustrates the switching circuit **102** of the interleaved boost converter **100.** The switching circuit **102** comprises switching arms **122** and **124,** to facilitate phase control in the switching circuit **102** by alternating operation of the switching arm **122** and switching arm **124.** The switching arms **122** and **124** operate in parallel with a phase shift between the switching arms **122** and **124.**

The switching arm **122** may include switches **Q2** and **Q3** along with inductors **L1.** Further, the switching arm **124** may include switches **Q4** and **Q5,** along with inductors **L2.** The switches **Q2** and **Q4** may be main switches and the switches **Q3** and **Q5** may be synchronous rectification switches. The switches **Q2, Q3, Q4,** and **Q5** may be selected from a group of switches including one or more of Metal-Oxide-Semiconductor Field-Effect Transistors (MOSFETs), Insulated Gate Bipolar Transistors (IGBTs), Bipolar Junction Transistors (BJTs), Gallium Nitride (GaN) FETs, Silicon Carbide (SiC) MOSFETs, and Thyristors, such as Silicon-Controlled Rectifiers (SCRs) and Gate Turn-Off Thyristors (GTOs). In an implementation, most preferably the switches **Q2, Q3, Q4,** and **Q5** may be MOSFETs.

Additionally, the switching arms **122** and **124** may each include a gate drive circuit. The gate drive circuits may be responsible for controlling the switches **Q2, Q3, Q4,** and **Q5** by providing a necessary voltage signal to one or more gates in the gate circuit. The switching circuit **102** may be designed to enhance power conversion efficiency by dynamically managing the operation of the switching arms **122** and **124** based on load demand, temperature, and operational time.

Further, the switching circuit **102** may include a set of bypass diodes **126,** including **CR10, CR11, CR12,** and **CR13,** to provide protection to components of the switching circuit **102** and ensure uninterrupted current flow. The bypass diodes play a critical role in preventing reverse current from flowing back into power source, which could otherwise damage components in the switching circuit **102.** The bypass diodes further help in mitigating voltage spikes that may occur due to rapid switching/alternating events.

In switching arm **122, Q2** and **Q3** regulate energy flow through the inductor **L1,** while in switching arm **124, Q4** and **Q5** control energy transfer through the inductor **L2.** Each switch is operated based on precise timing signals received from the gate drive circuits, ensuring that energy is stored and released efficiently to boost the output voltage. Activation and deactivation of the switches are dynamically controlled by the control unit **108** (not shown in **FIG. 2****)** to optimize efficiency and prevent overheating or excessive power dissipation.

The inductors **L1** and **L2** serve as energy storage components that temporarily hold electrical energy during a switching cycle. When the switches are in conduction mode (active), energy is stored in the magnetic field of the inductors. Once the switches are turn off (deactivated), the stored energy is transferred to the output, thereby increasing the voltage. Interleaved operation of the inductors **L1** and **L2** ensures that current ripple is minimized, reducing stress on output capacitors and improving stability of the interleaved boost converter **100.**

The gate drive circuits facilitate precise timing and switching control by amplifying and conditioning control signals received from the control unit **108,** thereby enabling smooth operation of the switching arms **122** and **124.** In an implementation, the gate drive circuit may include gate driver integrated circuits (ICs), which act as signal amplifiers, ensuring that the switches receive appropriate voltage and current levels at a corresponding gate terminal. The gate driver ICs may provide isolation and protection features, preventing excessive voltage spikes and ensuring reliable switching. Although **FIG. 2** does not explicitly show the gate driver ICs, they are essential components that would be externally connected to gates of the switches via control lines, such as **HO1, HO2, LO1,** and **LO2** (as shown in **FIG. 2****).** The control lines carry the control signals generated by the control unit **108** based on real-time system parameters, including electrical load, temperature, and operational time.

In addition to the gate driver ICs, the gate drive circuit may include a bootstrap circuit, which is essential for driving the main/high-side switches **(Q2** and **Q4).** Since the switches operate in a floating configuration, a voltage higher than source potential is required to fully turn them on. The bootstrap circuit may include bootstrap capacitors and bootstrap diodes, which work together to generate a voltage higher than the source potential. In **FIG. 2****,** diodes **CR14** and **CR15** may serve as the bootstrap diodes, facilitating charging of the bootstrap capacitor when the synchronous rectification/low-side switches **(Q3** and **Q5)** are conducting/active. While the bootstrap capacitors are not explicitly labelled in **FIG. 2****,** in one implementation the bootstrap capacitors may be positioned between the gate and source terminals of the main/high-side switches **Q2** and **Q4** to ensure stable operation.

Furthermore, the gate drive circuit includes gate resistors, such as **R9, R11, R13,** and **R15,** which are directly connected to the gate terminals of the switches. The gate resistors play a crucial role in regulating switching speed by limiting inrush current to the gate of the switches. By controlling charging and discharging rate of gate capacitance, the gate resistors help to minimize switching losses, reduce electromagnetic interference (EMI), and prevent excessive voltage ringing that could otherwise lead to circuit instability and damage.

The sensors **106** (not shown in **FIG. 2****)** are integrated into the switching circuit **102** to monitor temperature and operational time of the switches. Temperature sensors, such as thermistors or resistance temperature detectors (RTDs), may be connected to the switches **Q2, Q3, Q4,** and **Q5** to continuously track their thermal conditions. the thermal conditions are used by the control unit **108** to adjust the switching sequence or deactivate switching arms/phases if excessive heating is detected. Additionally, operational time sensors, including digital timers and counters within the control unit **108,** track the duration for which each switch has been active/conducting. The operational time is used to balance the wear and stress on the switches, extending the overall lifespan of the interleaved boost converter **100.**

The load detection module **104** (not shown in **FIG. 2****)** may be connected to the switching circuit **102** to assess electrical load on the interleaved boost converter **100.** The load detection module **104** determines whether the electrical load demand is high or low and provides information related to the electrical load to the control unit **108.** Based on the electrical loads, the control unit **108** may decide whether both switching arms **122** and **124** need to remain active or if one arm from the switching arms **122** and **124** can be temporarily disabled to improve efficiency. By dynamically adjusting the number of active switching arms/phases, the interleaved boost converter **100** reduces unnecessary power losses, lowers thermal stress on components, and improves overall performance.

The control unit **108** acts as a central processing unit that gathers data from sensors **106** and the load detection module **104** to make real-time adjustments to operation of the switching circuit **102** of the interleaved boost converter **100.** The control unit **108** generates pulse-width modulation (PWM) signals (control signals) for the gate drive circuits, ensuring that the switches switch operations at command. The control unit **108** continuously monitors system parameters including electrical load, temperature and operational time, and switches operation between the switching arms **122** and **124** to maintain efficiency, and prevent overheating.

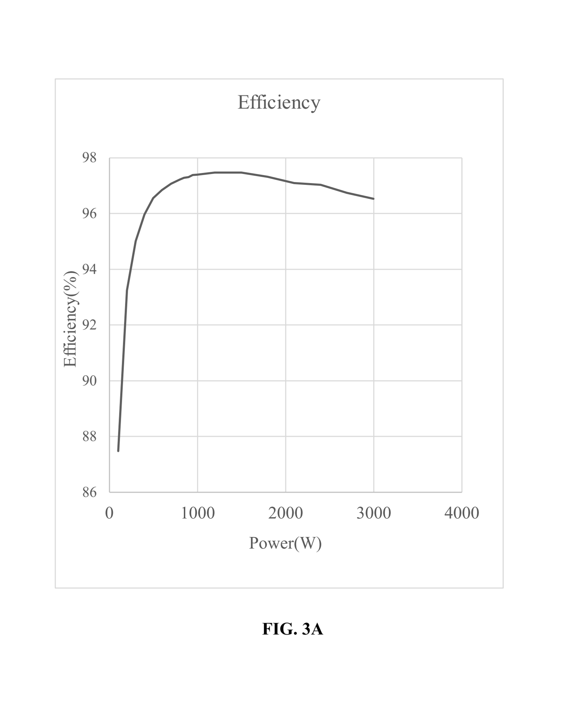

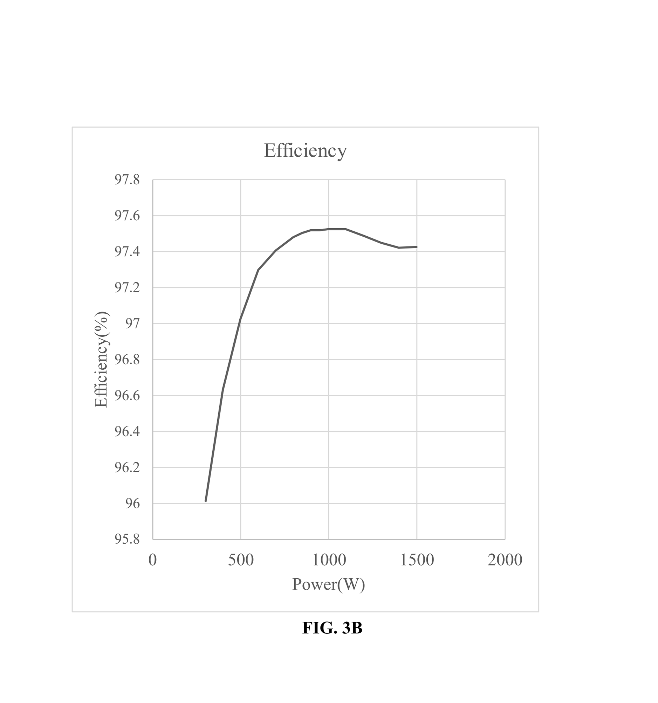

**FIGS. 3A** and **3B** illustrate graphs illustrating efficiency characteristics of the interleaved boost converter **100** under different phase operation modes. The figures **3a** and **3b** illustrate efficiency curves as a function of output power, highlighting the performance differences between dual-phase operation and single-phase operation.

**FIG. 3A** represents an efficiency curve for dual-phase operation, where both switching arms **122** and **124** are active/conducting. The power ranges from 0W to 3000W. As the power increases from near-zero load conditions, the efficiency rises sharply and reaches a peak of nearly 98% at an intermediate power level. Such high efficiency in dual-phase mode is achieved due to the current sharing between the two switching arms **122** and **124,** which reduces conduction losses in individual switches and inductors. The dual-phase operation ensures balanced power distribution and minimizes thermal stress on components of the switching circuit **102,** making it ideal for higher power demands.

**FIG. 3B** illustrates an efficiency curve for single-phase operation, where only one of the switching arms (either **122** or **124)** is active/conducting while the other switching arm remains inactive. The single-phase mode is typically employed at lower power levels to minimize switching losses associated with operating both switching arms/phases simultaneously. In **FIG. 3B****,** the power ranges from 0W to 1500W. The efficiency curve shows a rapid rise in efficiency at lower power levels, reaching a peak of approximately 97.6%. Compared to dual-phase operation, single-phase mode operates with reduced component stress and improved efficiency at lower power levels by avoiding unnecessary switching losses.

A comparison between **FIGS. 3A** and **3B** highlight efficiency optimization achieved through adaptive phase control strategy of the interleaved boost converter **100.** At lower loads, single-phase operation is preferred to reduce switching losses, while at higher loads, dual-phase operation enhances efficiency by balancing current and reducing conduction losses. The adaptive phase control contributes to higher overall efficiency, improved thermal management, and enhanced reliability by ensuring optimal operation under varying power conditions.

It is observed that at lower load conditions, single-phase operation demonstrates a slight efficiency advantage over dual-phase operation. Specifically, at loads below 10% of the total capacity, single-phase operation yields approximately 1% higher efficiency than dual-phase operation. At 20% load, the efficiency gain of single-phase operation reduces to about 0.5%, and at 30% load, the efficiency advantage is around 0.3%. Beyond 30% load, the efficiency levels of both operational modes converge, indicating that dual-phase operation is more beneficial at higher loads.

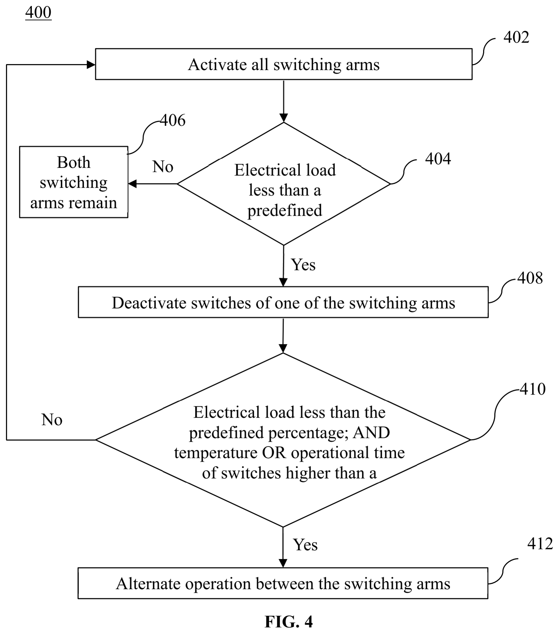

**FIG. 4** illustrates a flow chart of a method of controlling two phases/switching arms of an interleaved boost converter. In this regard, each block may represent a module, segment, or portion of code, which comprises one or more executable instructions for implementing the specified logical function(s). It should also be noted that in some alternative implementations, the functions noted in the blocks may occur out of the order noted in the drawings. For example, two blocks shown in succession in **FIG. 4** may in fact be executed substantially concurrently or the blocks may sometimes be executed in the reverse order, depending upon the functionality involved. Any process descriptions or blocks in flow charts should be understood as representing modules, segments, or portions of code that include one or more executable instructions for implementing specific logical functions or steps in the process, and alternate implementations are included within the scope of the examples in which functions may be executed out of order from that shown or discussed, including substantially concurrently or in reverse order, depending on the functionality involved. In addition, the process descriptions or blocks in flow charts should be understood as representing decisions made by a hardware structure such as a state machine.

The order in which method is described is not intended to be construed as a limitation, and any number of the described method blocks can be combined in any order to implement the method. Additionally, individual blocks may be deleted from the methods without departing from the scope of the subject matter described herein.

Furthermore, the method can be implemented in any suitable hardware, software, firmware, or combination thereof. Furthermore, the above-mentioned methods may be implemented in suitable hardware, computer-readable instructions, or a combination thereof. The steps of such methods may be performed by either a system under the instruction of machine-executable instructions stored on a non-transitory computer-readable medium or by dedicated hardware circuits, microcontrollers, or logic circuits. The method may include the following steps.

At step **402,** upon boot-up of an interleaved boost converter, a control unit may activate switches of both switching arms of a switching circuit in the interleaved boost converter.

The interleaved boost converter may be a type of DC-DC step-up converter that utilizes the switching circuit including two switching arms operating in parallel with a phase shift between the switching arms. Further, the control unit may include a processor and a memory to facilitate phase control in the switching circuit of the interleaved boost converter. Furthermore, the control unit may be connected to the switching circuit and its components, the sensors, and the load detection module.

At step **404,** electrical load on the interleaved boost converter is determined. The interleaved boost converter may include a load detection module to determine the electrical load on the interleaved boost converter.

The load detection module may be configured to analyse various electrical parameters, including output current, output voltage, input power, and switching frequency, to assess the real-time power demand of the interleaved boost converter. The load detection module may utilize the one or more sensors, including Hall effect sensors and shunt resistors, which may be placed in series with components of the switching circuit to measure the real-time current flowing through the switching circuit. Voltage sensors including resistive voltage dividers and capacitive probes, may be used to monitor the voltage across the output terminals of the interleaved boost converter, providing additional insight into the electrical load. Further, the load detection module detects the electrical load on the interleaved boost converter and conveys the electrical load to the control unit.

At step **406,** if the electrical load is determined to be higher that a predefined percentage of total capacity of the interleaved boost converter, the switching arms remain active. In one implementation, a preferred value of the predefined percentage may range from 40-50%.

At step **408,** if the electrical load is determined to be less that the predefined percentage of the total capacity of the interleaved boost converter, the control unit may deactivate one of the two switching arms. At lower electrical loads, single-phase/single switching arm operation is preferred to reduce switching losses, while at higher loads, dual-phase/switching arm operation enhances efficiency by balancing current and reducing conduction losses.

At step **410,** electrical load on the interleaved boost converter is determined again. Further, temperature and operational time is determined for switches in the switching arm that are currently active/conducting.

One or more sensors may be configured to determine temperature and operational time of switches of the switching circuit. The sensors may be positioned near or integrated with the switches in each switching arm to ensure accurate real-time monitoring without interfering with circuit operation. The sensors may be placed on at least one of drain terminals, source terminals, and heat sinks of the switches to detect any rise in temperature due to conduction losses and thermal stress. The sensors to determine temperature may be selected from a group of sensors including thermocouples, negative temperature coefficient (NTC) thermistors, silicon-based integrated temperature sensors, and infrared (IR) sensors.

To determine the operational time of the switches, the sensors may be configured to track the duration for which each switch in the switching circuit remains active. The sensors to determine operational time may be selected from a group of sensors including Hall effect current sensors, gate drive signal monitors, microcontroller-based pulse counters, and shunt resistors. The operational time may be used to implement phase balancing, preventing switches from experiencing excessive usage compared to others.

At step **412,** if the electrical load is determined to be less that the predefined percentage of the total capacity of the interleaved boost converter, and if the temperature or the operational time is determined to be higher than a predefined threshold of temperature or operational time respectively, the control unit may alternate operation between the two switching arms. Therefore, the switching arm currently active is deactivated and the switching arm currently deactivated is activated.

By dynamically managing and alternating activation of the switching arms, based on real-time temperature and operational time data, the control unit optimizes power conversion efficiency while preventing overheating and premature degradation of the switches. Controlled phase in the interleaved boost converter contributes to improved stability, reduced power losses, and enhanced durability of the interleaved boost converter under varying load conditions.

However, if the electrical load is determined to be higher that the predefined percentage of the total capacity of the interleaved boost converter, the control unit may activate both the switching arms. At higher electric loads, dual-phase/switching arm operation enhances efficiency by balancing current and reducing conduction losses.

The phase-controlled interleaved boost converter disclosed in the present invention provides several advantages over prior art, including optimized efficiency achieved through dynamic switching between single-phase and dual-phase operation based on load conditions to minimize switching and conduction losses, reduced thermal stress on semiconductor devices by balancing the operational time of switching arms to enhance component reliability and lifespan, enhanced fault tolerance through power distribution across multiple phases to enable continued operation in the event of a failure in one switching arm, increased lifespan of inductors, switches, and capacitors due to reduced electrical and thermal stress through intelligent phase switching and load balancing, and an overall increase in the mean time between failures (MTBF) of components within the interleaved boost converter.

The methods, systems, devices, graphs, and/or tables discussed herein are examples. Various examples may omit, substitute, or add various procedures or components as appropriate. For instance, in alternative examples, the methods may be performed in an order different from that described, and/or various stages may be added, omitted, and/or combined. Also, features described with respect to certain examples may be combined in various other examples. Different aspects and elements of the examples may be combined in a similar manner. Also, technology evolves and, thus, many of the elements are examples and do not limit the scope of the disclosure or claims. Additionally, the techniques discussed herein may provide differing results with different types of context awareness classifiers.

Unless defined otherwise, all technical and scientific terms used herein have the same meaning as commonly or conventionally understood. As used herein, the articles "a" and "an" refer to one or to more than one (i.e., to at least one) of the grammatical object of the article. By way of example, "an element" means one element or more than one element. "About" and/or "approximately" as used herein when referring to a measurable value such as an amount, a temporal duration, and the like, encompasses variations of +20% or +10%, +5%, or +0.1% from the specified value, as such variations are appropriate to in the context of the systems, devices, circuits, methods, and other implementations described herein. "Substantially" as used herein when referring to a measurable value such as an amount, a temporal duration, a physical attribute (such as frequency), and the like, also encompasses variations of ±20% or ±10%, ±5%, or ±0.1% from the specified value, as such variations are appropriate to in the context of the systems, devices, circuits, methods, and other implementations described herein.

As used herein, including in the claims, "and" as used in a list of items prefaced by "at least one of" or "one or more of" indicates that any combination of the listed items may be used. For example, a list of "at least one of A, B, and C" includes any of the combinations A or B or C or AB or AC or BC and/or ABC (i.e., A and B and C). Furthermore, to the extent more than one occurrence or use of the items A, B, or C is possible, multiple uses of A, B, and/or C may form part of the contemplated combinations. For example, a list of "at least one of A, B, and C" may also include AA, AAB, AAA, BB, etc.

While illustrative and presently preferred examples of the disclosed systems, methods, and/or machine-readable media have been described in detail herein, it is to be understood that the inventive concepts may be otherwise variously embodied and employed, and that the appended claims are intended to be construed to include such variations, except as limited by the prior art. While the principles of the disclosure have been described above in connection with specific apparatuses and methods, it is to be clearly understood that this description is made only by way of example and not as a limitation on the scope of the disclosure.

Described herein are also the following clauses:
1. An interleaved boost converter (100), comprises: a switching circuit (102) comprising two switching arms (122 and 124), wherein each switching arm comprises at least two switches and an inductor; a load detection module (104) to determine electrical load on the interleaved boost converter (100); one or more sensors (106) connected to each switch, to determine temperature and operational time of the switches; and a control unit (108) connected to the switches, the sensors (106), and the load detection module (104), wherein the control unit (108) is configured to: activate the switches of the switching arms (122 and 124) upon boot-up of the interleaved boost converter (100); deactivate the switches of one switching arm of the switching arms (122 and 124), based on a determination that the electrical load is less than a predefined percentage of total capacity of the interleaved boost converter (100); alternate operations between the switching arms (122 and 124), based on a determination that at least one of, the temperature and the operational time of the switches of one switching arm is higher than a predefined threshold temperature and a predefined threshold operational time; and re-activate the operation of the switches of the switching arms (122 and 124), based on a determination that the electrical load is higher than the predefined percentage of total capacity of the interleaved boost converter (100).
2. The interleaved boost converter (100) as claimed in any one of the preceding clauses, wherein the predefined percentage of the total capacity is in a range of 40% to 50%.
3. The interleaved boost converter (100) as claimed in any one of the preceding clauses, wherein alternating operations between the switching arms (122, 124) comprises deactivating a currently active switching arm and activating a previously deactivated switching arm.
4. The interleaved boost converter (100) as claimed in any one of the preceding clauses, wherein the control unit (108) is further configured to reduce a duty cycle of a switch whose temperature exceeds the predefined threshold and transfer operation to another switching arm, and wherein the control unit (108) is configured to seamlessly transition between single-phase operation and two-phase interleaved operation based on real-time load conditions.
5. The interleaved boost converter (100) as claimed in any one of the preceding clauses, wherein the predefined threshold operational time is in a range of 45 minutes to 90 minutes.
6. The interleaved boost converter (100) as claimed in any one of the preceding clauses, wherein the load detection module (104) determines the electrical load based on a plurality of electrical parameters, selected from output current, output voltage, input power, and switching frequency.
7. The interleaved boost converter (100) as claimed in any one of the preceding clauses, wherein each switching arm (122, 124) comprises a main switch and a synchronous rectification switch.
8. The interleaved boost converter (100) as claimed in any one of the preceding clauses, wherein the control unit (108) alternates operation between the switching arms only when the electrical load remains below the predefined percentage for a predetermined duration.
9. The interleaved boost converter (100) as claimed in any one of the preceding clauses, wherein the predefined threshold temperature is in a range of 50°C to 70°C.
10. The interleaved boost converter (100) as claimed in any one of the preceding clauses, wherein the control unit (108) further comprises a fault detection mechanism configured to initiate protective actions upon detection of overcurrent, overvoltage, or short-circuit conditions.
11. A method of controlling an interleaved boost converter (100) comprising two switching arms (122, 124), the method comprising: activating, by a control unit (108), switches of both switching arms (122, 124) upon boot-up of the interleaved boost converter (100); determining, by a load detection module (104), an electrical load on the interleaved boost converter (100); deactivating, by the control unit (108), switches of one of the switching arms (122, 124) based on a determination that the electrical load is less than a predefined percentage of a total capacity of the interleaved boost converter (100); monitoring, by one or more sensors (106), at least one of a temperature and an operational time of switches of an active switching arm; alternating, by the control unit (108), operation between the switching arms (122, 124) based on a determination that at least one of the temperature and the operational time exceeds a predefined threshold temperature or a predefined threshold operational time; and re-activating, by the control unit (108), switches of both switching arms (122, 124) based on a determination that the electrical load exceeds the predefined percentage of the total capacity of the interleaved boost converter (100).
Described herein is also a method of controlling an interleaved boost converter according to any one of the clauses herein, the method comprising: activating, by a control unit (108), switches of both switching arms (122, 124) upon boot-up of the interleaved boost converter (100); determining, by a load detection module (104), an electrical load on the interleaved boost converter (100); deactivating, by the control unit (108), switches of one of the switching arms (122, 124) based on a determination that the electrical load is less than a predefined percentage of a total capacity of the interleaved boost converter (100); monitoring, by one or more sensors (106), at least one of a temperature and an operational time of switches of an active switching arm; alternating, by the control unit (108), operation between the switching arms (122, 124) based on a determination that at least one of the temperature and the operational time exceeds a predefined threshold temperature or a predefined threshold operational time; and re-activating, by the control unit (108), switches of both switching arms (122, 124) based on a determination that the electrical load exceeds the predefined percentage of the total capacity of the interleaved boost converter (100).

## Claims

1. An interleaved boost converter (100), comprises:
a switching circuit (102) comprising two switching arms (122 and 124), wherein each switching arm comprises at least two switches and an inductor;
a load detection module (104) to determine electrical load on the interleaved boost converter (100);
one or more sensors (106) connected to each switch, to determine temperature and operational time of the switches; and
a control unit (108) connected to the switches, the sensors (106), and the load detection module (104), wherein the control unit (108) is configured to:
activate the switches of the switching arms (122 and 124) upon boot-up of the interleaved boost converter (100);
deactivate the switches of one switching arm of the switching arms (122 and 124), based on a determination that the electrical load is less than a predefined percentage of total capacity of the interleaved boost converter (100);
alternate operations between the switching arms (122 and 124), based on a determination that at least one of, the temperature and the operational time of the switches of one switching arm is higher than a predefined threshold temperature and a predefined threshold operational time; and
re-activate the operation of the switches of the switching arms (122 and 124), based on a determination that the electrical load is higher than the predefined percentage of total capacity of the interleaved boost converter (100).

2. The interleaved boost converter (100) as claimed in claim 1, wherein the predefined percentage of the total capacity is in a range of 40% to 50%.

3. The interleaved boost converter (100) as claimed in any one of the preceding claims, wherein alternating operations between the switching arms (122, 124) comprises deactivating a currently active switching arm and activating a previously deactivated switching arm.

4. The interleaved boost converter (100) as claimed in any one of the preceding claims, wherein the control unit (108) is further configured to reduce a duty cycle of a switch whose temperature exceeds the predefined threshold and transfer operation to another switching arm, and wherein the control unit (108) is configured to seamlessly transition between single-phase operation and two-phase interleaved operation based on real-time load conditions.

5. The interleaved boost converter (100) as claimed in any one of the preceding claims, wherein the predefined threshold operational time is in a range of 45 minutes to 90 minutes.

6. The interleaved boost converter (100) as claimed in any one of the preceding claims, wherein the load detection module (104) determines the electrical load based on a plurality of electrical parameters, selected from output current, output voltage, input power, and switching frequency.

7. The interleaved boost converter (100) as claimed in any one of the preceding claims, wherein each switching arm (122, 124) comprises a main switch and a synchronous rectification switch.

8. The interleaved boost converter (100) as claimed in any one of the preceding claims, wherein the control unit (108) alternates operation between the switching arms only when the electrical load remains below the predefined percentage for a predetermined duration.

9. The interleaved boost converter (100) as claimed in any one of the preceding claims, wherein the predefined threshold temperature is in a range of 50°C to 70°C.

10. The interleaved boost converter (100) as claimed in any one of the preceding claims, wherein the control unit (108) further comprises a fault detection mechanism configured to initiate protective actions upon detection of overcurrent, overvoltage, or short-circuit conditions.

11. A method of controlling an interleaved boost converter (100) comprising two switching arms (122, 124), the method comprising:
activating, by a control unit (108), switches of both switching arms (122, 124) upon boot-up of the interleaved boost converter (100);
determining, by a load detection module (104), an electrical load on the interleaved boost converter (100);
deactivating, by the control unit (108), switches of one of the switching arms (122, 124) based on a determination that the electrical load is less than a predefined percentage of a total capacity of the interleaved boost converter (100);
monitoring, by one or more sensors (106), at least one of a temperature and an operational time of switches of an active switching arm;
alternating, by the control unit (108), operation between the switching arms (122, 124) based on a determination that at least one of the temperature and the operational time exceeds a predefined threshold temperature or a predefined threshold operational time; and
re-activating, by the control unit (108), switches of both switching arms (122, 124) based on a determination that the electrical load exceeds the predefined percentage of the total capacity of the interleaved boost converter (100).
